# EUROPEAN PATENT SPECIFICATION

(11) **EP 0 356 652 B1**
(45) Date of publication and mention of the grant of the patent: **07.09.1994**
(21) Application number: 89111966.1
(22) Date of filing: 30.06.1989
(51) Int. Cl.: G05B 19/04

(54) **A control means for washing and/or drying machines for laundry**
Steuerungseinrichtung für Wasch- und/oder Trockenmaschinen für Wäschereien
Moyen de commande pour lave-linge et/ou sèche-linge de blanchisserie

(30) Priority: 31.08.1988 IT 4575888
(43) Date of publication of application: 07.03.1990
(73) Proprietor: INDUSTRIE ZANUSSI S.p.A., I-33170 Pordenone (IT)
(72) Inventor: Brussa, Massimo, I-33170 Pordenone (IT)
(74) Representative: Kirschner, Klaus Dieter, Dipl.-Phys.

(56) References cited:
- FR-A- 2 365 151
- US-A- 4 267 495
- US-A- 4 468 600
- US-A- 4 743 820

## Description

The present invention relates to a control means adapted for washing and/or drying machines for laundry, provided with an electronic microprocessor and an electromechanical programmer for effecting the run of the various washing and/or drying programs for the laundry.

Washing and/or drying machines for laundry of the described species are known (U.S. patent no. 4,468,600) comprising substantially an electronic microprocessor in which different operating programs can be started which are selected via keys provided in the front part of the machine, and comprising an electromechanical programmer controlled by the microprocessor and adapted to drive successively the various electrical components of the machine according to predetermined sequences.

This electromechanical programmer consists of a conventional pack of coaxial cams to be set rotating by a small electric motor, one cam being designed with a particular profile and cooperating with a group of electrical contacts connected with the microprocessor and adapted to generate, in accordance with the particular angular position of the programmer cams, corresponding electrical signals which are transmitted to the microprocessor to allow for recognition of the position reached during the run of the various programs.

This type of programmer, however, is rather unreliable in performing the function of recognizing the angular position thereof, given that the above-described electrical contacts tend to oxidize in the course of time and that this oxidation can only be prevented by providing special contacts, such as gold-plated contacts, which are too costly.

Furthermore, this programmer is constructionally complicated by the presence of the cam with the particular profile and of the electrical contacts associated therewith, which also require an accurate calibration for ensuring correct performance of the above-mentioned function.

In US-4 267 495 there is disclosed a controller for controlling the high-to-low speed transition in a bar machine in order to achieve a controlled speed at the optimum point to decrease the cycle time and to avoid a damage of the cutting tools. The controller comprises a potentiometer with the rotating arm representing the actual position of a drum shaft.

According to the above discussed problems it is the object of the present invention to realize a control means for washing and/or drying machines for laundry which is adapted to allow the recognition of the angular position of the electromechanical programmer of the machine in a simple and functionally reliable way.

This and other objects are obtained according to the invention by a control means for washing and/or drying machines for laundry, comprising at least one electronic microprocessor designed to store and control the run of a plurality of predetermined programs to be started by selector means connected to the microprocessor, and further comprising at least one electromechanical programmer triggered by the microprocessor and equipped with a plurality of cams dovetailed on a common shaft to effect the drive of the various electrical components of the machine according to the operating sequences fixed by the microprocessor.

The control means in question is characterized in that it comprises at least one rotating electrical contact to be set rotating in synchronism with the shaft and cooperating with electrically conductive means connected with the microprocessor and adapted to generate, in accordance with the particular angular position of the electrical contact, corresponding electrical voltage levels recognizable by the microprocessor.

The invention will be better understood from the following description, intended solely as a nonrestrictive example, with reference to the adjoined drawings in which
Fig. 1 shows the electrical circuit diagram of the present control means, executed in a first embodiment;
Fig. 2 shows the electrical circuit diagram of a second embodiment of the present means.

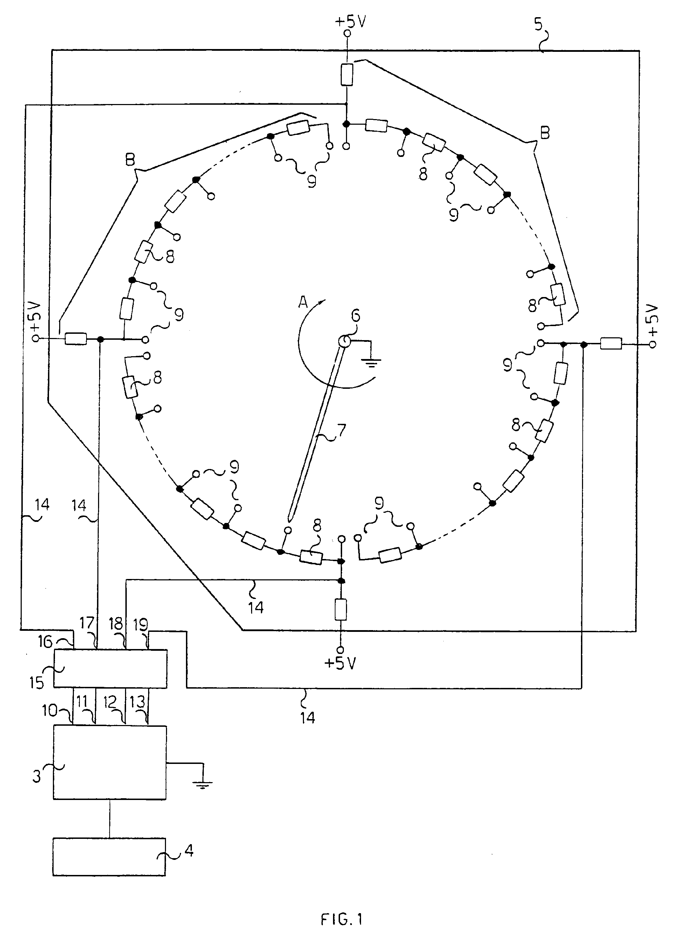

Referring to Fig. 1, one can see the inventive control means used in a washing and/or drying machine for laundry, comprising an electronic microprocessor 3 designed to store and control the run of a plurality of predetermined washing and/or drying programs to be started by selector means 4 of the conventional type connected with the microprocessor and disposed in the front control panel (not shown) of the machine, and further comprising an electromechanical programmer 5 triggered by microprocessor 3 and equipped with a plurality of cams (not shown) dovetailed on a common shaft 6 that is grounded and adapted to effect the drive of the various electrical components (not shown) of the machine according to the operating sequences fixed by the microprocessor.

The inventive control means consists substantially of at least one rotating electrical contact 7 connected with shaft 6 and to be set rotating in the direction indicated by arrow A in synchronism with the shaft, and consists further of a plurality of electrical resistors 8 disposed in a circular direction about rotating contact 7 and interconnected in series in such a way as to form separate groups of resistors *B* distributed in angular fashion about the rotating contact.

In the present case, four different groups of resistors *B* are represented by way of example, each of which consists of fifteen resistors 8 disposed in series whose terminals are connected to corresponding fixed contacts 9 adapted to be contacted selectively by the free end of electrical contact 7 during the rotation thereof.

Furthermore, a terminal of the end resistor of each group of resistors *B* is energized by a continuous low voltage (in the present case 5 V) and connected with corresponding inputs 10, 11, 12, 13 of microprocessor 3 via respective electrical conductors 14 and an analog-to-digital converter 15, which may also be incorporated within the microprocessor.

Thus, during the rotation of electrical contact 7 the free end thereof comes in contact progressively with various fixed contacts 9 of groups of resistors *B* and, in accordance with the particular angular position, the electrical contact generates, via the respectively connected resistors, corresponding voltages toward ground which are applied to respective inputs 16, 17, 18, 19 of analog-to-digital converter 15.

In its turn, the converter converts the arriving voltage levels into corresponding numeric characters in binary code, which are transmitted to corresponding inputs 10-13 microprocessor 3 where the information is decoded, thereby permitting recognition of the exact angular position of rotating contact 7 and thus also of the cams of electromechanical programmer 5.

In particular, microprocessor 3 recognizes each group of resistors *B* and the resistors of the group which are respectively connected during the rotation of electrical contact 7, by reading the respective input of the microprocessor which has been reached by the coded information corresponding to the generated voltage, and by determining the level of the voltage.

Consequently, in accordance with the angular position of rotating contact 7 and of the cams of programmer 5, microprocessor 3 is able to recognize directly this position and the corresponding position reached during the run of each washing and/or drying program for the laundry.

The present control means may also be realized utilizing a rotating contact which is kept in continuous contact with a resistive material applied to a support made of insulating material and performing the same function as resistors 8 of the means of Fig. 1.

In this case, the rotation of the rotating contact thus effects, due to the connection of different portions of resistance, linearly variable voltage levels which are applied to the microprocessor which decodes them, thereby identifying the corresponding angular position of the moving contact and of the programmer cams.

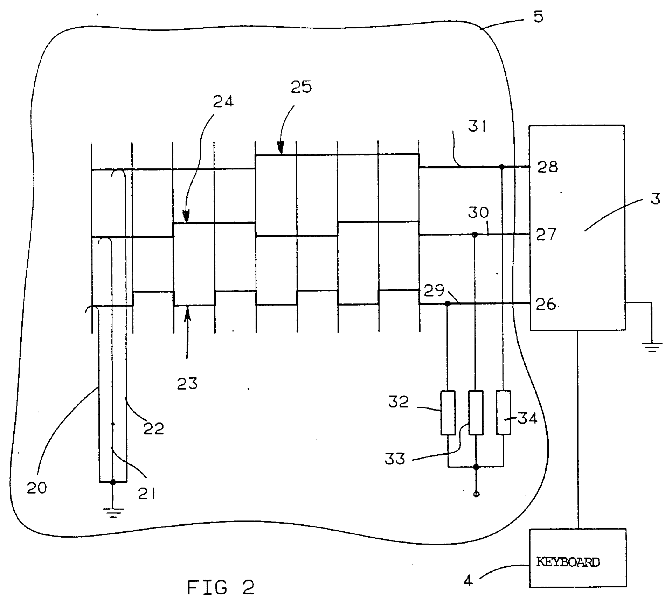

Referring now to Fig. 2, one can see another version of the inventive control means, which is used in the machine of the specified type comprising the same electrical components which are therefore indicated by the same reference numbers.

This control means consists substantially of a plurality of rotating electrical contacts, in the present case three identical contacts 20, 21, 22 connected with the shaft (not shown) of the electromechanical programmer of the machine, the shaft being grounded, in such a way that the electrical contacts are set rotating in synchronism with the shaft.

The means in question furthermore consists of a plurality of electrically conductive supports (in the present case three different supports 23, 24, 25, are represented developed in the linear direction), disposed in the circular direction about respective rotating contacts 20, 21, 22 in such a way that the latter can effect, during their rotation, a sliding contact against respective conductive supports 23, 24, 25.

As can be seen from Fig. 2, the conductive supports are furthermore connected with corresponding inputs 26, 27, 28 of microprocessor 3 via respective electrical conductors 29, 30, 31 which in their turn are supplied by a continuous low voltage (in the present case 5 V) via respective limiting resistors 32, 33, 34.

The aforesaid conductive supports are designed with profiles stepped at regular intervals along the circumferential surface of the supports in such a way that, in accordance with the angular position of respective rotating contacts 20, 21, 22, the latter can come in contact, or not, with the surface of corresponding conductive supports 23, 24, 25, thereby causing the voltage to be applied, or not, toward ground with respect to the supports.

Thus, in accordance with the position of each rotating contact with respect to the corresponding conductive support, corresponding information in binary code is generated which is transmitted to microprocessor 3 where the information is decoded, thereby permitting recognition of the position of the rotating contacts and thus also of that of the cams of the electromechanical programmer.

In the considered example, conductive supports 23, 24, 25 are subdivided into eight intervals spaced apart by the same length and the corresponding stepped profiles of the supports are designed in such a way that rotating contacts 20, 21, 22 can contact the conductive supports after two, three and five intervals of the supports, respectively.

The support means thus realized allows for recognition of the angular position of the programmer in a simple and functionally reliable way.

## Claims

1. A control means adapted for washing and/or drying machines for laundry, comprising at least one electronic microprocessor (3) designed to store and control the run of a plurality of predetermined programs to be started by selector means connected to the microprocessor (3), and further comprising at least one electromechanical programmer (5) triggered by the microprocessor and equipped with a plurality of cams dovetailed on a common shaft to effect the drive of the various electrical components of the machine according to the operating sequences fixed by the microprocessor, characterized in that it comprises at least one rotating electrical contact (7; 20, 21, 22) to be set rotating in synchronism with the shaft (6) and cooperating with electrically conductive means (8; 23, 24, 25) connected with the microprocessor (3) and adapted to generate, in accordance with the particular angular position of the electrical contact (7; 20, 21, 22), corresponding voltage levels recognizable by the microprocessor (3),
wherein the electrically conductive means comprises a plurality of electrical resistors (8) disposed in the circular direction about the rotating contact (7) and interconnected in series in such a way as to form separate groups of resistors (*B*) connected separately with the microprocessor (3) and with a respective supply voltage, the resistors (8) being connectable selectively by the rotating contact (7) during the rotation thereof.

2. The control means of claim 1, **characterized** in that the rotating contact (7; 20, 21, 22) is grounded.

3. The control means of claim 1, **characterized** in that the electrically conductive means comprise a plurality of supports (23, 24, 25) disposed in the circular direction about respective rotating contacts (20, 21, 22) and connected with the microprocessor (3) and also capable of being energized selectively during the rotation of the rotating contacts (20, 21, 22).

4. The control means of claim 3, **characterized** in that the supports (23, 24, 25) are designed with profiles stepped at regular intervals along the circumferential surface of the supports.

## Patentansprüche

1. Steuerungseinrichtung, geeignet für Wasch- und/oder Trockenmaschinen für Wäschereien, mit mindestens einem elektronischen Mikroprozessor (3) zur Speicherung und Steuerung des Ablaufs einer Anzahl von festgelegten Programmen, die durch eine mit dem Mikroprozessor (3) verbundene Auswahlvorrichtung gestartet werden, und außerdem mit mindestens einer elektromechanischen Programmiereinrichtung (5), die durch den Mikroprozessor ausgelöst wird und mit einer Anzahl von schwalbenschwanzförmig auf einer gemeinsamen Welle angeordneten Nocken versehen ist, für den Antrieb der verschiedenen elektrischen Bauteile der Maschine entsprechend den von dem Mikroprozessor bestimmten Arbeitsabläufen,
**dadurch gekennzeichnet, daß** sie mindestens einen elektrischen Drehkontakt (7, 20, 21, 22) aufweist, der synchron mit der Welle (6) in Drehung versetzt wird und mit einer elektrisch leitenden Einrichtung (8, 23, 24, 25) zusammenarbeitet, die mit dem Mikroprozessor (3) verbunden und geeignet ist, in Übereinstimmung mit der speziellen Winkelposition des elektrischen Kontaktes (7, 20, 21, 22) entsprechende durch den Mikroprozessor (3) erkennbare Spannungspegel zu erzeugen,
wobei die elektrisch leitende Einrichtung eine Anzahl von elektrischen Widerständen (8) aufweist, die in Kreisrichtung um den Drehkontakt (7) angeordnet und untereinander in Reihe geschaltet sind, derart, daß sie getrennte Gruppen von Widerständen (B) bilden, die getrennt mit dem Mikroprozessor (3) und mit einer entsprechenden Speisespannung verbunden sind, wobei die Widerstände (8) selektiv durch den Drehkontakt (7) während dessen Drehung verbunden werden können.

2. Steuerungseinrichtung nach Anspruch 1, **dadurch gekennzeichnet, daß** der Drehkontakt (7, 20, 21, 22) geerdet ist.

3. Steuerungseinrichtung nach Anspruch 1, **dadurch gekenn****zeichnet, daß** die elektrisch leitende Einrichtung eine Anzahl von Kontaktflächen (23, 24, 25) aufweist, die in Kreisrichtung um entsprechende Drehkontakte (20, 21, 22) angeordnet und mit dem Mikroprozessor (3) verbunden sind und selektiv während der Drehung der Drehkontakte (20, 21, 22) erregt werden können.

4. Steuerungseinrichtung nach Anspruch 3, **dadurch gekenn****zeichnet, daß** die Kontaktflächen (23, 24, 25) mit Profilen ausgebildet sind, die in gleichmäßigen Abständen entlang der Umfangsfläche der Kontaktflächen abgestuft sind.

## Revendications

1. Moyen de commande pour lave-linge et/ou sèche-linge de blanchisserie, comprenant au moins un microprocesseur électronique (3) conçu de manière à stocker et à commander le déroulement d'une pluralité de programmes prédéterminés, devant être démarrés par un moyen sélecteur relié au microprocesseur (3) et comprenant en outre au moins un programmateur électromécanique (5) déclenché par le microprocesseur et pourvu d'une pluralité de cames en forme de queue d'aronde sur un arbre commun, afin d'effectuer la commande des différents composants électriques de la machine en fonction des séquences de fonctionnement déterminées par le microprocesseur, caractérisé en ce qu'il comprend au moins un contact électrique (7; 20, 21, 22) rotatif, destiné à être mis en rotation de manière synchrone avec l'arbre (6) et coopérant avec un moyen électroconducteur (8; 23, 24, 25) relié au microprocesseur (3) et adapté de façon à produire, en fonction de la position angulaire particulière du contact électrique (7; 20, 21, 22), des niveaux de tension correspondants pouvant être reconnus par le microprocesseur (3), dans lequel le moyen électroconducteur comprend une pluralité de résistances électriques (8) disposées dans une direction circulaire autour du contact rotatif (7) et interconnectées en série, de manière à former des groupes séparés de résistances (B) reliées séparément au microprocesseur (3) et à une source de tension respective, les résistances (8) pouvant être reliées sélectivement par le contact rotatif (7) durant sa rotation.

2. Moyen de commande selon la revendication 1, caractérisé en ce que le contact rotatif (7; 20, 21, 22) est mis à la masse.

3. Moyen de commande selon la revendication 1, caractérisé en ce que le moyen électroconducteur comprend une pluralité de supports (23, 24, 25), disposés dans la direction circulaire autour des contacts rotatifs (20, 21, 22) respectifs et reliés au microprocesseur (3) et également capables d'être activés sélectivement durant la rotation des contacts rotatifs (20, 21, 22).

4. Moyen de commande selon la revendication 3, caractérisé en ce que les supports (23, 24, 25) sont pourvus de profils étagés à intervalles réguliers le long de la surface circonférentielle des supports.
